# EUROPÄISCHE PATENTANMELDUNG

(11) **EP 4 079 710 A1**
(43) Veröffentlichungstag der Anmeldung: **26.10.2022**
(21) Anmeldenummer: 22167607.5
(22) Anmeldetag: 11.04.2022
(51) Int. Cl.: C04B 35/626, B28B 7/44, B28B 11/14, B26D 1/00

(54) **VERFAHREN ZUM BEREITSTELLEN VON GRÜNKÖRPERN FÜR DIE HERSTELLUNG VON KERAMISCHEN FORMKÖRPERN, VORRICHTUNG ZUR BEREITSTELLUNG VON GRÜNKÖRPERN ZUR HERSTELLUNG VON KERAMISCHEN FORMKÖRPERN UND VERFAHREN ZUM HERSTELLEN VON KERAMISCHEN FORMKÖRPERN**

(30) Priorität: 22.04.2021 DE 102021110190
(71) Anmelder: Polycrystal design GmbH, 01067 Dresden (DE)
(72) Erfinder: Dr. Klimke, Jens, 01309 Dresden (DE)
(74) Vertreter: Sperling, Thomas

(57) **Zusammenfassung**

Die Erfindung betrifft Grünkörper für die Herstellung von keramischen Formkörpern, ein Verfahren zum Bereitstellen von Grünkörpern für die Herstellung von keramischen Formkörpern sowie eine Vorrichtung zur Bereitstellung von Grünkörpern zur Herstellung von keramischen Formkörpern. Ferner betrifft die Erfindung ein Verfahren zum Herstellen von keramischen Formkörpern, insbesondere transparenten Keramikwafern und hochdichten Keramiken. Bei dem Verfahren zum Bereitstellen von Grünkörpern für die Herstellung von keramischen Formkörpern, insbesondere transparenten Keramikwafern und hochdichten Keramiken, wird eine Suspension enthaltend keramische Partikel und Gelbildner zur Ausbildung eines formstabilen, elastischen Gelformkörper bereitgestellt, die Suspension in eine Gießform überführt, welche in mindestens eine erste Richtung einem Vielfachen der Längenausdehnung eines vorgegebenen Grünkörperrohlings entspricht und in mindestens einer weiteren Richtung ein vorgegebenes Schwindaufmaß aufweist, wobei die überführte Suspension infolge einer Polymerisationsreaktion des Gelbildners einen sich an der Gießform abformenden formstabilen elastischen Gelformkörper ausbildet und der erhaltene formstabile, elastische Gelformkörper nach Entformung materialverlustfrei mit einem Schneidmittel in mehrere vorgegebene Grünkörperrohlinge konfektioniert wird und die so erhaltenen konfektionierten Grünkörperrohlinge anschließend getrocknet werden. Die Grünkörper können anschließend gesintert werden.

## Beschreibung

Die Erfindung betrifft Grünkörper für die Herstellung von keramischen Formkörpern, ein Verfahren zum Bereitstellen von Grünkörpern für die Herstellung von keramischen Formkörpern sowie eine Vorrichtung zur Bereitstellung von Grünkörpern zur Herstellung von keramischen Formkörpern. Ferner betrifft die Erfindung ein Verfahren zum Herstellen von keramischen Formkörpern, insbesondere transparenten Keramikwafern und hochdichten Keramiken.

Keramische Formkörper und keramische Wafer werden in vielen Bereichen der Technik, insbesondere in der Elektrotechnik, eingesetzt. Zur Herstellung von keramischen Formkörpern und keramischen Wafern sind Gelcasting-Verfahren oder abrasive beziehungsweise spannabhebende Verfahren bekannt, wobei gewünschte Keramikformteile durch Konfektionieren und/oder spanabhebendes Bearbeiten eines sprödharten Volumenkörpers erhalten werden.

Beim Gelcasting-Verfahren handelt es sich um ein endkonturnahes Formgebungsverfahren, bei welchem ein anorganisches Rohmaterial in Form von Keramikpartikeln in einem Lösungsmittel mit einem darin gelösten Gelbildner dispergiert wird, wobei eine gießbare Suspension erhalten wird, in welcher durch eine Polymerisation des Gelbildners die Keramikpartikel zueinander ortsfest eingebettet werden. Durch die Verwendung von Wasser als Lösungsmittel können keramische Partikel enthaltende Hydrogele bereitgestellt werden. Die so erhaltenen gelfeuchten beziehungsweise ungetrockneten Gelformkörper, werden zu Grünkörperrohlingen getrocknet, gegebenenfalls entbindert und anschließend gesintert. Verschiedene Gelcasting-Verfahren, bei welchen keramischen Partikel in einem Polymer eingebettet werden, sind beispielsweise aus US 5028362, US 5145908 oder US 6228299 bekannt.

Es hat sich gezeigt, das Gelcasting-Verfahren zur Herstellung von vergleichsweise dünnen Keramikwafern nur bedingt geeignet sind, da ein zerstörungsfreies Entformen mit hohem Aufwand verbunden ist. Weiterhin hat sich gezeigt, dass beim Gießen von vergleichsweise dünnen Gelschichten zur Herstellung von dünnen Keramikwafern aufgrund des Verhältnisses von Oberfläche und Dicke der Gelschichten Oberflächeninhomogenitäten und Spannungen auftreten können, welche beim Vorgang des Sinterns zu einem unerwünschten Verbiegen der Keramiken führen. Beim Gießen von vergleichsweise dünnen Gelen mit einer Kantenlänge von 5 cm bis 20 cm und einer Dicke von zirka 5 mm in weitgehend luftdichten Gießformen wurde weiter beobachtet, dass die resultierenden Gelformkörper an der Kantenlänge zur Form eine feste Haut bilden, oder bei der Gegenwart von Restsauerstoff eine schlierige Oberfläche aufweisen, die mit Wasser abgewaschen werden muss. Solche nachteiligen Oberflächeneffekte, welche ebenfalls für ein Verbiegen der Keramiken während des Sinterns ursächlich sein können, wirken sich umso stärker aus, je dünner die Gelschichten gegossen werden. Durch aufwändige Trocknungsprozesse unter Druck oder in hygroskopischer Umgebung können derartige Effekte verringert - jedoch nicht vermieden werden.

Abrasive Verfahren beziehungsweise spanabhebende Verfahren, wie das Wafersägen, bei welchen eine gewünschte Form einer Keramik aus einem keramischen Volumenkörper als Ausgangsmaterial mit einem spanabhebenden Werkzeug erhalten wird, haben zum Nachteil, dass aufgrund der sprödharten Eigenschaften des Ausgangsmaterials mit nur geringen Vorschüben gearbeitet werden kann, was sehr zeitaufwändig ist. Ferner setzt die spanabhebende Bearbeitung voraus, dass infolge des Materialabtrags bei der Konfektionierung eines keramischen Volumenkörpers in mehrere Teile ein Materialaufmaß berücksichtigt werden muss, was mit erhöhten Materialkosten für den keramischen Volumenkörper und zusätzlichen Kosten für die Entsorgung des Materialabriebs einhergeht. Nachteilig ist weiterhin, dass für die Bearbeitung des sprödharten Ausgangsmaterials Spezialwerkzeuge eingesetzt werden müssen, welche einem hohen Verschleiß und einem erhöhten Wartungsaufwand unterliegen.

Insbesondere der Prozess des Wafersägens ist zeit- und kostenintensiv und es entsteht ein Materialverlust durch Abrieb, der als Abfall aufwändig entsorgt werden muss. Es ist ferner bekannt, ungesinterte getrocknete Gelkörper oder vorgebrannte Grünkörper aufgrund der geringeren Härte beispielsweise mit einem diamantbesetzten Sägeblatt zu konfektionieren. Nachteilig wirkt sich allerdings aus, dass aufgrund der porösen Struktur kein Kühlmittel verwendet werden kann, und zudem häufig Kantenausbrüche beim Sägen der empfindlichen Grünkörper beobachtet wurden. Darüber hinaus besteht auch beim Sägen von getrockneten Gelkörpern und vorgesinterten Grünkörpern das Problem des Materialabriebs, welcher bei der Bemaßung berücksichtigt und außerdem entsorgt werden muss.

Der Erfindung liegt daher die Aufgabe zugrunde, ein Verfahren zum Herstellen von keramischen Formkörpern, insbesondere transparenten Keramiken und hochdichten Keramikwafern vorzuschlagen, mit welchem die aus dem Stand der Technik bekannten Nachteile verringert werden können. Es ist ferner Aufgabe der Erfindung, eine Vorrichtung vorzuschlagen, mit welcher Grünkörperrohlinge oder Grünkörper zur Herstellung von keramischen Formkörpern, insbesondere transparenten Keramiken und hochdichten Keramikwafern, auf einfache Weise bereitgestellt werden können.

Die Aufgabe wird durch ein Verfahren mit den Merkmalen gemäß Patentanspruch 1, Grünkörpern mit den Merkmalen gemäß Patentanspruch 9 und einer Vorrichtung mit den Merkmalen gemäß Anspruch 10 gelöst. Weiterhin wird die Aufgabe durch ein Verfahren mit den Merkmalen gemäß Patentanspruch 19 gelöst. Ausführungsvarianten und Weiterbildungen sind in den jeweils abhängigen Patentansprüchen angegeben.

Der Erfindung liegt die Erkenntnis zugrunde, dass keramische Partikel enthaltende Grünkörperrohlinge, welche aus einem geeigneten Gelmaterial gebildet werden, mit einem Schneidmittel im gelfeuchten Zustand nahezu materialverlustfrei und mit hoher Schnittgeschwindigkeit aus einem Gelformkörper konfektioniert werden können. Bei dem erfindungsgemäßen Verfahren wird daher so vorgegangen, dass keramische Partikel in einem zur Ausbildung eines formstabilen elastischen Gelformkörpers geeigneten Gelbildner suspendiert werden. Es wird somit zunächst eine Suspension enthaltend keramische Partikel und einen Gelbildner zur Ausbildung eines formstabilen, elastischen Gelformkörpers bereitgestellt. Dabei liegen der Gelbildner und die keramischen Partikel in einem Lösungsmittel, vorzugsweise Wasser oder einem Wasser-Alkohol-Gemisch, vor oder der Gelbildner ist das Lösungsmittel, so dass die keramischen Partikel in dem Gelbildner suspendiert sind. Die bereitgestellte Suspension wird anschließend in eine Gießform überführt, welche in mindestens eine erste Richtung einem Vielfachen der Längenausdehnung eines vorgegebenen Grünkörperrohlings entspricht und in mindestens eine weitere Richtung ein vorgegebenes Schwindaufmaß aufweist. In der Gießform bildet die überführte Suspension infolge einer Polymerisationsreaktion des Gelbildners einen sich an der Gießform abformenden, formstabilen, elastischen Gelformkörper aus. Der so erhaltene formstabile, elastische Gelformkörper wird vor einer Trocknung mit einem Schneidmittel materialverlustfrei in mehrere vorgegebene Grünkörperrohlinge konfektioniert. Zuvor kann der erhaltene formstabile, elastische Gelformkörper aus der Gießform entformt werden. Anschließend werden die konfektionierten Grünkörperrohlinge getrocknet.

Zur Bereitstellung der Suspension werden die anorganischen keramischen Partikel in dem Lösungsmittel, vorzugsweise Wasser, suspendiert und optional gemahlen, um störende Agglomerate zu beseitigen. Die Dispergierung kann mit einem Rührwerk unter Regelung des pH-Wertes und optional unter Dosierung von Dispergierhilfsmitteln, wie zum Beispiel Polyacrylaten oder Ammoniumcitrat, durchgeführt werden. Dabei können Dispergierverfahren eingesetzt werden, um eine dünnflüssige leicht gießbare Suspension zu erhalten. Ein hoher Feststoffgehalt bei gleichzeitig geringer Viskosität ist ein Zeichen für eine gut eingestellte Suspension. Dabei soll die Viskosität so gering sein, dass sich Luftblasen durch Unterdruck entfernen lassen und zerplatzen. Erreichbare Feststoffgehalte unterliegen einer Vielzahl von Einflüssen, besonders die Partikelgröße und Partikelform, die Wechselwirkung der Partikel miteinander, sowie Verunreinigungen und die Dichte spielen eine Rolle.

Es können keramische Partikel mit einer mittleren Partikelgröße im Bereich von 0,01 µm bis 10 µm eingesetzt werden. Bevorzugt können keramische Partikel mit einer mittleren Partikelgröße im Bereich von 0,025 µm bis 5 µm eingesetzt werde. Die besten Ergebnisse werden mit keramischen Partikeln mit einer mittleren Partikelgröße im Bereich von 0,05 µm bis 2 µm erreicht, so dass besonders bevorzugt keramische Partikel mit einer mittleren Partikelgröße im Bereich von 0,05 µm bis 2 µm eingesetzt und in der Suspension suspendiert werden. Um die gewünschte Partikelgröße der keramischen Partikelgröße zu erreichen und Agglomerate zu zerteilen, kann vorgesehen werden, dass die Suspension vor der Überführung in die Gießform mit einem Mahlwerkzeug gemahlen wird. Die Suspension wird vorzugsweise so eingestellt, dass bei einem hohen Feststoffgehalt eine geringe Viskosität erreicht wird, um ein Fließen zu ermöglichen. Dabei soll die Viskosität so gering sein, dass sich Dampfblasen durch Unterdruck, das heißt durch die Beaufschlagung der Gießform mit einem Vakuum entfernen lassen.

Bei der Bereitstellung der Suspension wird vorzugsweise ein organischer Gelbildner eingesetzt. Der Gelbildner kann aus einem oder mehreren Monomeren bestehen, die durch eine Polymerisationsreaktion vernetzt werden. Anorganische Gele, die durch eine Sol-Gel Reaktion entstehen, werden als Gelbildner nicht berücksichtigt. Der Gelbildner kann aus Abkömmlingen einer Gruppe enthaltend Polymere/Copolymere gebildet aus Acrylaten, Methacrylaten, Ethylenglycolen, Pyrrolidonen, Saccariden, Vinylalkoholen, Acrylamiden, Isobutylen, Maleinsäureanhydrid ausgewählt sein und entsprechend eingesetzt werden. Geeignete Gelbildner sind somit Gelbildner aus Abkömmlingen einer Gruppe enthaltend Polymere/Copolymere gebildet aus Acrylaten, Methacrylaten, Ethylenglycolen, Pyrrolidonen, Saccariden, Vinylalkoholen, Acrylamiden, Isobutylen, Maleinsäureanhydrid, wobei anorganische Gele, die durch eine Sol-Gel Reaktion entstehen, ungeeignet sind.

Dadurch, dass die Gießform in mindestens eine erste Richtung einem Vielfachen der Längenausdehnung eines vorgegebenen Grünkörperrohlings entspricht und in mindestens eine weitere Richtung ein vorgegebenes Schwindaufmaß aufweist, wird ein formstabiler, elastischer Gelformkörper als Volumenkörper bereitgestellt, aus welchem entlang der ersten Richtung formstabile und elastische Grünkörperrohlinge konfektioniert werden können, wobei ein vorgegebenes Schwindaufmaß in der zweiten Richtung, welche orthogonal zu der ersten Richtung orientiert ist, bereits berücksichtigt ist. In dem der formstabile, elastische Gelformkörper bereits vor dem Trocknen, das heißt im gelfeuchten Zustand, vorzugsweise unmittelbar nach dem Entformen aus der Gießform konfektioniert wird, können infolge der elastischen Eigenschaften des formstabilen, elastischen Gelformkörpers mehrere Grünkörperrohlinge aus dem formstabilen, elastischen Gelformkörper in kurzer Zeit materialverlustfrei bereitgestellt werden. Überraschenderweise hat sich gezeigt, dass durch die erfindungsgemäße Konfektionierung des formstabilen, elastischen Gelformkörpers vor dem Trocknen Wechselwirkungen wie Oberflächeninhomogenitäten und Spannungen in den resultierenden Grünkörperrohlingen verringert oder vermieden werden, was einen positiven Einfluss auf den Sinterprozess hat, da die Grünkörper beim Sintern formstabil bleiben und insbesondere dünne, flächige Grünkörper nicht zum Verbiegen neigen.

Ein weiterer Vorteil des erfindungsgemäßen Verfahrens besteht in der Realisierbarkeit komplexer Formen durch den Gießprozess mit einer vorgegebenen Gießform, welche unterschiedliche geometrische Formen aufweisen kann. Infolge der direkten Überführung der zum Beispiel durch Mahlung oder andere bekannte Verfahren zur De-Agglomerierung und Stabilisierung von Pulverpartikeln aufbereiteten Suspension in den formstabilen, elastischen Gelformkörper, wird die Bildung von Granulaten und Agglomeraten von keramischen Partikeln innerhalb der Matrix des formstabilen, elastischen Gelformkörpers vermieden. Im Vergleich zu den in der technischen Keramik üblichen Trockenpress- oder Spritzgussverfahren wird dadurch eine gleichmäßigere Verteilung der keramischen Partikel erreicht, so dass letztlich weniger Materialdefekte auftreten. Als hochdichte technische Keramiken werden Keramiken ohne offene Porosität mit Dichten von 97 bis 100 Prozent angesehen.

Im Gegensatz zu anderen kolloidalen Formgebungsmethoden wie zum Beispiel den "direct coagulation casting"-Verfahren, bei denen vergleichsweise weiche, nicht gut schneidbare, anorganische Gele bereitgestellt werden, wird bei dem erfindungsgemäßen Verfahren durch die Verwendung organischer Gelbildner eine Verwendung von unterschiedlichen keramischen Rohstoffen ermöglicht. Die Grenzen der Anwendbarkeit werden durch die Partikelgröße einerseits durch die Sedimentation grober Partikel und andererseits durch abnehmende Feststoffgehalte bei Nanopartikeln aufgrund der Zunahme des Oberflächenvolumenverhältnisses bestimmt. Es hat sich gezeigt, dass sich durch das erfindungsgemäße Verfahren hergestellte Keramikwafer oder keramische Formteile beim Sintern in Anwesenheit von Luft nicht verbiegen. Mit dem erfindungsgemäßen Verfahren können somit auch dünne Keramikwafer mit hoher Qualität bereitgestellt werden.

Während der Polymerisationsreaktion kann vorgesehen werden, dass die Suspension mit einem Vakuum entgast wird. Ferner kann vorgesehen werden, dass die Suspension bereits bei der Bereitstellung mit einem Vakuum entgast wird. Weiterhin kann eine Beaufschlagung mit einem Vakuum während des Verfahrens bis zur Entformung aus der Gießform vorgesehen sein.

Bei der Bereitstellung der Suspension können Dispergierhilfsmittel, wie zum Beispiel Polyacrylate oder Ammoniumcitrat, und Mittel zur Regelung des pH-Wertes und der Oberflächenspannung eingesetzt werden.

Die Suspension wird vorzugsweise so bereitgestellt, dass die Suspension einen Feststoffgehalt an keramischen Partikeln im Bereich von 20 Vol% bis 80 Vol% aufweist. Vorzugsweise kann der Feststoffgehalt an keramischen Partikeln der Suspension im Bereich von 20 Vol% bis 60 Vol% betragen.

Gemäß einer Ausführungsvariante des erfindungsgemäßen Verfahrens kann vorgesehen sein, dass der formstabile, elastische Gelformkörper und das Schneidmittel beim Konfektionieren relativ zueinander mit einem vorgegebenen, konstanten Vorschub bewegt werden. Weiterhin kann vorgesehen werden, dass für verschiedene Anwendungen in Abhängigkeit der Formgebung des zu konfektionierenden, formstabilen, elastischen Gelformkörpers der Vorschub beim Konfektionieren variiert wird.

Gemäß einer vorteilhaften Ausführungsvariante des erfindungsgemäßen Verfahrens kann vorgesehen werden, dass der formstabile, elastische Gelformkörper gleichzeitig mit mehreren gleichmäßig beabstandeten Schneidmitteln konfektioniert wird. Indem der formstabile, elastische Gelformkörper gleichzeitig mit mehreren gleichmäßig beabstandeten Schneidmittel konfektioniert wird, werden vorteilhaft gleichzeitig mehrere gleichmäßig konfektionierte Grünkörperrohlinge bereitgestellt, so dass Zeit eingespart werden kann.

Als Schneidmittel können eine Klinge oder mehrere gleichmäßig beabstandete Klingen eingesetzt werden. Weiterhin kann vorgesehen werden, dass als Schneidmittel ein gespannter Schneiddraht oder mehrere gespannte Schneiddrähte eingesetzt werden. Es hat sich gezeigt, dass der formstabile, elastische Gelformkörper im gelfeuchten Zustand durch die Verwendung einer Klinge oder mehrerer Klingen und/oder eines Schneiddrahts oder mehreren Schneiddrähten als Schneidmittel materialverlustfrei zerteilt werden kann. Vorteilhafterweise muss dadurch kein Aufmaß für Materialabrieb berücksichtigt werden.

Da die Gießform in mindestens eine Richtung einem Vielfachen der Längenausdehnung eines vorgegebenen Grünkörperrohlings entspricht, kann vorgesehen werden, dass der formstabile, elastische Gelformkörper entlang der ersten Richtung konfektioniert wird. Dabei kann eine Konfektionierung entlang der ersten Richtung in einem Winkel zur ersten Richtung vorgesehen sein. Vorzugsweise wird der formstabile, elastischen Gelformkörper orthogonal zur ersten Richtung orientiert konfektioniert.

Das erfindungsgemäße Verfahren ist zur Bereitstellung beziehungsweise Herstellung von Grünkörpern für die Herstellung von Keramikwafern, Substraten und Formteilen wie Zahnrädern, Unterlegscheiben, Gehäusen, Ringen und Muttern vorgesehen. Es können beispielsweise Grünkörper zur Herstellung von keramischen Formteilen und Keramikwafern unter Verwendung pulverförmiger Rohstoffe wie vorzugsweise Al₂O₃, MgAl₂O₄, ZrO₂, vollstabilisiertem ZrO₂, teilstabilisiertem ZrO₂ oder Y₂Al₅O₁₂ in reiner Form oder im Mischungen der Rohstoffe, gebildet werden, wobei funktionale Dotierungen, wie Metallionen, zum Beispiel Ti, V, Cr, Mn, Nb, Fe, Co, Ni, Cu, Ag, Au, La, Ce, Pr, Nd, Sm, Eu, Gd, Tb, Dy, Ho, Er, Tm, Yb, Lu in Form von Oxiden oder Salzen inkorporiert werden können. Die angegebenen Rohstoffe sollen die Anwendbarkeit anderer nichtoxidischer oder metallischer Rohstoffe nicht einschränken.

Gelöst wird die Aufgabe weiter mit einem Grünkörper für die Herstellung von keramischen Formkörpern, insbesondere transparenten Keramikwafern und hochdichten Keramiken, wobei der Grünkörper eingebettete keramische Partikel aufweist und wobei der Grünkörper aus einem formstabilen, elastischen Gelformkörper durch materialverlustfreies Schneiden mit mindestens einer Klinge und/oder mindestens einem Schneiddraht konfektioniert ist.

Die Erfindung betrifft weiterhin eine Vorrichtung zum Bereitstellen von Grünkörperrohlingen oder Grünkörpern zur Herstellung von keramischen Formkörpern. Die Vorrichtung weist zumindest eine zur Bereitstellung eines formstabilen, elastischen Grünkörpers vorgesehene Gießform auf, welche in mindestens eine erste Richtung einem Vielfachen der Längenausdehnung eines vorgegebenen Grünkörperrohlings entspricht und in mindestens eine weitere Richtung ein vorgegebenes Schwindaufmaß aufweist. Weiterhin weist die erfindungsgemäße Vorrichtung eine zur Konfektionierung eines aus der Gießform erhaltenen formstabilen, elastischen Gelformkörpers vorgesehene Schneidvorrichtung auf, welche mindestens ein Schneidmittel zum materialverlustfreien Schneiden des formstabilen, elastischen Gelformkörpers aufweist.

Die Gießform kann vorzugsweise modular mit einem zylindrischen Grundkörper und beidseitig fluiddicht verschließbaren Deckeln ausgebildet sein. Hinsichtlich der Formgebung der Gießform bestehen keine Grenzen. Die Gießform kann in jede Richtung ein Schwindaufmaß aufweisen. So kann die Gießform derart dimensioniert sein, dass ein vorgegebenes Schwindaufmaß auch in die erste Richtung ausgebildet ist, um formstabile, elastische Gelformkörper zu erhalten, welche ein Schwindaufmaß in zwei Richtungen der räumlichen Ausdehnung aufweisen. Weiterhin kann der Gießformkörper ein Schwindaufmaß in jede räumliche Richtung aufweisen. Zur Herstellung der Gießform kann von einem 3D-Druckverfahren Gebrauch gemacht werden, um fertigungstechnisch komplexe Formgestaltungen zu realisieren. Die Gießform bildet eine Kavität, deren Formgebung dem Negativ der Form eines herzustellenden formstabilen, elastischen Gelformkörpers entspricht. Weiterhin sollte die Gießform derart ausgestaltet sein, dass eine Beaufschlagung mit einem Vakuum möglich ist. Varianten der Gießform können vollständig oder teilweise aus Metall oder Kunststoff ausgebildet sein.

Die Vorrichtung kann so ausgebildet sein, dass ein gebildeter formstabiler, elastischer Gelformkörper und das mindestens ein Schneidmittel relativ zueinander mit einem vorgegebenen Vorschub bewegt werden können. Eine entsprechende Vorschubeinrichtung kann als Bestandteil der erfindungsgemäßen Vorrichtung vorgesehen sein.

Gemäß einer vorteilhaften Weiterbildung der erfindungsgemäßen Vorrichtung kann die Schneidvorrichtung in einem vorgegebenen Abstand zueinander angeordnete Schneidmittel aufweisen, wobei der Abstand zwischen den Schneidmitteln einstellbar ist. Als Schneidmittel sind insbesondere nicht-abrasiv wirkende Schneidmittel vorgesehen. Gemäß einer Ausgestaltung der Schneidvorrichtung ist das Schneidmittel eine Klinge. Gemäß einer weiteren Ausgestaltung der Schneidvorrichtung ist das Schneidmittel ein gespannter Draht. Als Klinge kann eine Messerklinge oder eine rotierende Kreisscheibe eingesetzt sein. Die Klinge kann aus Keramik oder aus Metall mit einer Beschichtung aus Teflon oder Keramik ausbildet sein. Anwendungszweckentsprechend kann die Klinge einen Wellenschliff oder einen glatten Schliff aufweisen. Die Schneidkante der Klinge kann eine Form, beispielsweise einen Radius oder eine elliptische Form aufweisen. Radien oder elliptische Formen der Schneidkante können konvex oder konkav ausgebildet sein.

Gemäß einer weiteren vorteilhaften Weiterbildung der erfindungsgemäßen Vorrichtung kann ein der Form zumindest einer Seite der Gießform nachgebildetes plattenförmiges Überführungsmittel vorgesehen sein, mit welchem ein aus der Gießform erhaltener formstabiler, elastischer Gelformkörper in die Schneidvorrichtung überführt werden kann. Das plattenförmige Überführungsmittel weist eine Kavität auf, welche der Form einer Seite der Gießform entspricht, so dass der gebildete formstabile, elastische Gelformkörper von dem Überführungsmittel gehalten in die Schneidvorrichtung transportiert werden kann.

Gemäß einer noch weiteren vorteilhaften Weiterbildung der erfindungsgemäßen Vorrichtung können Gießkerne vorgesehen sein, welche zur Ausbildung von formstabilen, elastischen Gelformhohlkörpern in der Gießform anordenbar sind.

Ferner kann die erfindungsgemäße Vorrichtung eine Trocknungseinrichtung zum Trocken von konfektionierten formstabilen, elastischen Gelformkörpern aufweisen. Die Trocknungseinrichtung kann vorgesehen sein, um aus den konfektionierten Grünkörperrohlingen konfektionierte Grünkörper zu erhalten.

Gemäß der Konzeption der Erfindung wird ein noch gelfeuchter formstabiler, elastischer Gelformkörper vorzugsweise unmittelbar nach der Polymerisation des Gelbildners und noch vor der Trocknung mit einem Schneidmittel materialverlustfrei konfektioniert. Es können jedoch Umstände auftreten, welche es nicht ermöglichen, eine Konfektionierung des formstabilen, elastischen Gelformkörpers unmittelbar nach der Polymerisation oder nach dem Entformen aus der Gießform vorzunehmen. In diesem Fall kann es erforderlich sein, dass ein gebildeter formstabiler, elastischer Gelformkörper feucht gehalten wird. Zweckmäßigerweise kann eine entsprechende Feuchthaltekammer als Bestandteil der erfindungsgemäßen Vorrichtung vorgesehen sein.

In Abhängigkeit von der Dicke, Größe und Festigkeit des formstabilen, elastischen Gelformkörpers kann eine Schneide mit Wellenschliff oder mit glatten Schliff verwendet werden. Es hat sich gezeigt, dass mit einem Schneidmittel welches einen glatten Schliff aufweist, eine bessere Oberflächenqualität erzeugt werden kann.

Gemäß einer Ausgestaltung der erfindungsgemäßen Vorrichtung kann vorgesehen sein, dass an einer Seite der Gießform ein Schieber angeordnet ist, mit welchem der polymerisierte, formstabile, elastische Gelformkörper aus der Gießform herausschiebbar ist, so dass jeweils der heraustretende Teil mit dem Schneidmittel der Schneidvorrichtung abgeschnitten werden kann.

Weiterhin umfasst die Erfindung ein Verfahren zum Herstellen von keramischen Formkörpern, insbesondere transparenten Keramikwafern und hochdichten Keramiken aus Grünkörpern, welche nach dem erfindungsgemäßen Verfahren hergestellt wurden. Es hat sich gezeigt, dass sich die erfindungsgemäß hergestellten Grünkörper zur Herstellung von transparenten Keramikwafern und hochdichten Keramiken durch Sintern eignen. So können durch Sintern von nach dem erfindungsgemäßen Verfahren hergestellten Grünkörpern transparente Keramikwafer und hochdichte Keramiken hergestellt werden. Zum Herstellen von transparenten Keramikwafern und hochdichten Keramiken werden die Grünkörper bei einer Temperatur im Bereich von 1100 °C bis 1850 °C, vorzugsweise im Bereich von 1200 °C bis 1600 °C gesintert.

Das Verfahren zum Bereitstellen des Grünkörpers und das Verfahren von zum Sintern des Grünkörpers kann nahtlos erfolgen, wobei das Sintern als zusätzlicher Verfahrensschritt angesehen werden kann, um transparente Keramikwafer und hochdichte Keramiken herzustellen.

Gemäß einer Weiterbildung kann vorgesehen werden, dass die Grünkörper vor dem Sintern bei einer Temperatur im Bereich von 400 °C bis 1000 °C vorgebrannt werden, um organische Bestandteile pyrolytisch zu zersetzen.

Die Sinterung der aus den Grünkörpern gebildeten Keramiken kann unter Anwesenheit von Luft, Gasatmosphäre wie zum Beispiel Stickstoff, Argon, Wasserstoff, oder im Vakuum erfolgen. Zur Erhöhung der Dichte kann vorgesehen werden, dass eine druckunterstützen Wärmebehandlung, wie zum Beispiel das Heißpressen oder heiß-isostatisches Pressen durchgeführt wird. Es kann vorgesehen werden, dass die aus den Grünkörpern gesinterten Keramiken nach dem Sintern bei einer Temperatur im Bereich von 1100 °C bis 1800 °C heißisostatisch verpresst werden.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörige Zeichnung. Es zeigt:

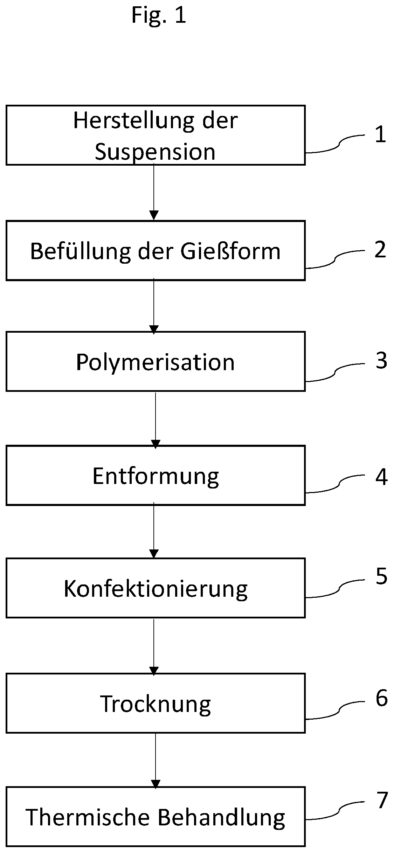

- Fig. 1:: eine schematische Darstellung zur Erläuterung des erfindungsgemäßen Verfahrens.

Die Figur 1 zeigt eine schematische Darstellung zur Erläuterung des erfindungsmäßigen Verfahrens zur Herstellung von keramischen Formkörpern. Bei dem erfindungsgemäßen Verfahren wird in Schritt 1 eine Suspension bereitgestellt, in dem ein vorgegebener Anteil keramischer Partikel mit einem Anteil eines Gelbildners, welcher dazu geeignet ist, einen formstabilen elastischen Gelformkörper auszubilden, in einer Dispergiereinrichtung dispergiert wird. Der Gelbildner kann in einer vorgegebenen Konzentration in einer wässrigen Lösung vorgelegt sein. Die so bereitgestellte Suspension wird in einem Schritt 2 in eine Gießform überführt, welche in mindestens eine erste Richtung einem Vielfachen der Längenausdehnung eines vorgegebenen Grünkörperrohlings entspricht und in mindestens eine weitere Richtung ein vorgegebenes Schwindaufmaß aufweist. In einem Schritt 3 werden die keramischen Partikel infolge einer Polymerisationsreaktion des Gelbildners in einem sich an der Gießform abformenden formstabilen, elastischen Gelformkörper eingebettet. Der so gebildete formstabile, elastische Gelformkörper wird in einem Schritt 4 von der Gießform entformt und in eine Schneidvorrichtung überführt. In der Schneidvorrichtung wird der noch gelfeuchte, formstabile, elastische Gelformkörper gemäß einem Schritt 5 mit einer Klinge und/oder einem gespannten Draht als Schneidmittel in vorgegebene Grünkörperrohlinge konfektioniert. Somit werden im Schritt 5 aus dem formstabilen, elastischen Gelformkörper mehrere Teile konfektioniert, welche in ihrem gelfeuchten Zustand als Grünkörperrohlinge bezeichnet werden können. Aus den Grünkörperrohlingen werden in einem Schritt 6 Grünkörper, indem die vorkonditionierten Grünkörperrohlinge getrocknet werden. Die so erhaltenen Grünkörper dienen als Ausgangsmaterial für den Sinterprozess in Schritt 7. Der siebte Verfahrensschritt, das heißt das Sintern, erfolgt bei einer Temperatur im Bereich von 1100 °C bis 1850 °C., vorzugsweise im Temperaturbereich von 1200 °C bis 1600 °C.

Nachfolgend sind Ausführungsbeispiele zur weiteren Erläuterung der Erfindung angegeben. Verfahrensschritte zum Gießen und/oder Konfektionieren sind mit der erfindungsgemäßen Vorrichtung durchführbar.

### Ausführungsbeispiel 1:

Zur Bereitstellung einer Keramikpartikel enthaltenden Suspension wird ein feinkörniges synthetisches Korundpulver, welches eine Reinheit von 99,99 % und eine Partikelgröße von d90=0.2 µm aufweist, in deionisiertem Wasser als Lösungsmittel bei einem pH-Wert von 4, welche mit verdünnter Salpetersäure eingestellt wird, dispergiert und über Nacht mit einer Kugelmühle zusammen mit Korundmahlkugeln gemahlen. Danach wird die Suspension von den Mahlkugeln getrennt und die Monomere Methylen-bisacrylamid und Methacrylamid im Masseverhältnis 1:8 zugesetzt, so dass der Feststoffgehalt 72 Masse% und der Monomergehalt 3,5 Masse% beträgt. Nach Zugabe von 0,5 Masse% einer 1%igen Ammoniumperoxodisulfatlösung wird die Suspension bei 200 mbar im Vakuum entgast und in eine einseitig verschlossene Gießform, wobei es sich um ein Acrylglas-Rohr mit einem Innendurchmesser von 21 mm und einer Länge von 250 mm handelt, gegossen. Die Gießform wird entgast, verschlossen und für 2 Stunden bei einer Temperatur von 60 °C temperiert, wobei die Polymerisationsreaktion vollzogen wird. Nach Abkühlung wird die Gießform geöffnet und der gebildete formstabile, elastische Gelformkörper mit Luftdruck herausgepresst. Ein Schneiden des formstabilen, elastischen Gelformkörpers erfolgt materialverlustfrei mit einer geraden Klinge in Scheiben.

Die nachfolgenden Beispiele stellen weitere anschauliche Ausgestaltungen der Erfindung dar, wobei die Erfindung nicht auf die Beispiele beschränkt sein soll. Insbesondere können unterschiedliche keramische Ausgangsstoffe, Polymere, Gießformen und Schneidwerkzeuge verwendet werden.

### Ausführungsbeispiel 2:

In 50 ml Wasser werden 4,5 ml Dispergierhilfsmittel Ammoniumpolyacrylat und 0,5 g Agarose gelöst. Zu dieser Lösung wird bei 70 °C im Wasserbad mit einem Rührwerk 150 g vorgewärmtes Zirkoniumoxidpulver (zum Beispiel ZirPro CY3Z-RS, Coloryze BF Black, Tosoh TZ-8Y, TZ-8YS, TZ-3YE) gegeben und für 30 Minuten unter Ultraschalleinfluss dispergiert. Danach wird die Suspension in zwei einseitig verschlossene Rohre aus PVC (Polyvinylchlorid), welche einen Innendurchmesser von 21 mm und eine Länge von 250 mm aufweisen, gegossen und bei einer Temperatur in einem Bereich von 40 °C bis 50 °C mit Unterdruck entgast. Die Rohre, welche als Gießformen dienen, werden zum Abkühlen verschlossen und nach einer zweistündigen Lagerung im Kühlschrank geöffnet. Die Suspension ist zu einem festen jedoch elastischen Gelformkörper geliert, welcher mittels Druckluft entformt und in die Schneideinrichtung gelegt wird. Die Schneidvorrichtung ist 250 mm lang und hat eine halbkreisförmige Öffnung mit einem Durchmesser von 21 mm zur Aufnahme des Gelformkörpers. In die beiden Seitenteile von jeweils 250 mm Länge und 20 mm Höhe oberhalb der halbkreisförmigen Öffnung sind im Abstand von 3 mm Führungsschlitze mit einer Dicke von 0,7 mm ausgebildet, die sich bis 1 mm unterhalb des Bodens des Halbkreises erstrecken, so dass der Gelformkörper mit einer Klinge, beispielswiese mit einem Cuttermesser als Schneidmittel entlang der Führungsschlitze in gleichmäßige Scheiben geschnitten werden kann. Die Scheiben werden aus der Form entnommen und zwischen saugfähigem Papier getrocknet. Eine weitere Bearbeitung kann vorgesehen sein. Beispielswiese können die so gebildeten Grünkörperrohlinge beziehungsweise Grünkörper geschliffen, gefräst, gebohrt und/oder poliert werden. Anschließend werden die Grünkörper bei 1550 °C in Anwesenheit von Luft gesintert. Nach dem Sintern kann ein weiterer Bearbeitungsschritt vorgesehen werden. So kann ein Schleifen, Fräsen, Bohren und/oder Polieren sowie ein heißisostatisches Nachverdichten vorgesehen werden. Das Volumen der Suspension, sowie Durchmesser und Länge der Gießform können beliebig variiert werden. Die Schneidvorrichtung ist entsprechend der Abmaße der Gießform anpassbar. Die Gießformen können unterschiedliche Formen aufweisen. Beispielswiese kann eine Gießform einen viereckigen, fünfeckigen oder sechseckigen Querschnitt aufweisen. Weiterhin kann in der Gießform ein wasserdichter Kern angeordnet werden. Beim Entformen wird der Kern aus dem Gelformkörper gezogen, so dass in der Mitte des Gelformkörpers eine Kavität verbleibt. Durch das nachfolgende Schneiden können somit Scheibenringe erhalten werden. Es können mehrere Kerne verwendet werden. Als Material für die Gießform und den Kern können Metall, Glas, Wachs oder Kunststoff verwendet werden. Vorzugsweise wird transparenter Kunststoff wie zum Beispiel PVC oder Acryl verwendet. Die Gießform und der Kern können mittels eines 3D-Druckverfahrens hergestellt werden.

### Ausführungsbeispiel 3:

In 50 ml Wasser als Lösungsmittel werden 4,5 ml Dispergierhilfsmittel Ammoniumpolyacrylat und 0,5 g Agarose gelöst. Zu dieser Lösung wird bei 70 °C im Wasserbad mit einem Rührwerk 100 g vorgewärmtes Korundpulver (zum Beispiel Baikowski CR6, Baikowski BMA-15, Almatis CT-3000) geben und 30 Minuten unter Ultraschall dispergiert. Die weitere Verarbeitung erfolgt wie im vorstehenden Beispiel 2 beschrieben.

### Ausführungsbeispiel 4:

In 50 ml Wasser als Lösungsmittel werden 4,5 ml Ammoniumpolyacrylat als Dispergierhilfsmittel und 0,5 g Agarose gelöst. Zu dieser Lösung wird bei 70 °C im Wasserbad mit einem Rührwerk 27,08 g vorgewärmtes Korundpulver (zum Beispiel Taimei TM-DAR) mit 36,30 g Yttriumoxidpulver (Reacton 99,99) und 0,15 g Cerium(III)nitrat geben und 30 Minuten unter Ultraschalleinfluss dispergiert. Die weitere Verarbeitung erfolgt wie in Beispiel 2 beschrieben, jedoch erfolgt die Sinterung bei 1650 °C an Luft zu transluzenten lumineszierenden Substraten.

### Ausführungsbeispiel 5:

Die Suspensionen, wie in den Beispielen 2-4 beschrieben, werden bei entsprechender Anpassung des erforderlichen Volumens in ein einseitig verschlossenes PVC-Rohr, welches einen Durchmesser von 6 cm und eine Länge von 10 cm aufweist, gegossen. Das als Gießform dienende PVC-Rohr wird entgast, verschlossen und für eine Dauer von 10 Stunden abgekühlt. Nach der Abkühlung wird der gebildete, formstabile, elastische Gelformkörper aus dem PVC-Rohr herausgedrückt. An einer Schneidvorrichtung wird ein Anschlag auf einen Abstand von 3 mm hinter dem kreisförmigen, rotierenden Messer als Schneidmittel eingestellt. Der formstabile, elastische Gelformkörper wird dann mit einem Schieber an den Anschlag gedrückt und parallel zum rotierenden Messer geführt, so dass dabei eine Scheibe von dem formstabilen, elastischen Gelformkörper abgeschnitten wird. Dieser Vorgang wird 25-mal wiederholt indem der verbleibende Rest des Gelformkörpers erneut gegen den Anschlag gedrückt wird. Die Scheiben werden anschließend getrocknet und bei 800 °C vorgebrannt, um die Organik zu entfernen. Vor dem Vorbrennen kann ein Bearbeitungsschritt durch Schleifen, Fräsen, Bohren und/oder Polieren vorgesehen werden. Das Sintern erfolgt bei 1100 °C bis 1800 °C. Weiterhin kann ein heißisostatisches Pressen bei 1100 °C bis 1800 °C vorgesehen werden. Weiterhin kann eine Nachbearbeitung durch Schleifen, Fräsen, Bohren und/oder Polieren vorgesehen werden.

### Ausführungsbeispiel 6:

Der Gelformkörper aus Vergleichsbeispiel 2 wird entformt und wie in Beispiel 5 beschrieben geschnitten, gesintert und bearbeitet.

### Ausführungsbeispiel 7:

Feinkörniges, synthetisches Korundpulver mit einer Reinheit von 99,99 % und einer Partikelgröße d90 = 0.2 µm wird in deionisiertem Wasser als Lösungsmittel bei einem pH-Wert von 4, welcher mit verdünnter Salpetersäure eingestellt wird, dispergiert und über Nacht mit einer Kugelmühle zusammen mit Korundmahlkugeln gemahlen. Danach wird die Suspension von den Mahlkugeln getrennt und die Monomere Polyethylenglycoldimethacrylat mit einer mittleren Molmasse von 1000 g/mol, Methylen-bisacrylamid und Methacrylamid im Masseverhältnis 1:2:16 zugesetzt, so dass der Feststoffgehalt 73 Masse% und der Monomergehalt 3,5 Masse% beträgt. Nach Zugabe von 0,5 % einer 1%igen Ammoniumperoxodisulfatlösung wird die Suspension bei 200 mbar durch Beaufschlagung mit einem Vakuum entgast und in ein einseitig verschlossenes Acrylglas-Rohr als Gießform gegossen. Das Acrylglas-Rohr weist einen Durchmesser von 21 mm und eine Länge von 250 mm auf, wobei mittig in dem Acrylglas-Rohr ein Aluminiumkern mit einem Durchmesser von 6 mm Durchmesse als Kern positioniert ist. Die Gießform wird entgast, verschlossen und bei 50 °C für eine Dauer von 2 Stunden temperiert, wobei die Suspension polymerisiert. Nach Abkühlung wird das Acrylglas-Rohr geöffnet und der Kern herausgezogen. Das Acrylglas-Rohr wird dann in eine Schneidvorrichtung eingespannt. An der Schneidvorrichtung wird ein Anschlag auf einen Abstand von 3 mm hinter dem kreisförmigen, rotierenden Messer als Schneidmittel eingestellt, so dass 3 mm dicke Scheiben bereitgestellt werden können. Der gebildete, formstabile, elastische Gelformkörper wird mit einem passenden Schieber an den Anschlag gedrückt, so dass er aus dem Acrylglasrohr herausragt. Dabei wird der formstabile, elastische Gelformkörper parallel zum rotierenden Messer geführt, so dass der formstabile, elastische Gelformkörper mit dem Schneidmittel in gleichmäßige Scheiben konfektioniert werden kann. Dieser Vorgang wird 60-mal wiederholt indem der verbleibende Rest des formstabilen, elastischen Gelformkörpers erneut gegen den Anschlag gedrückt wird. Die so bereitgestellten Grünkörperrohling-Scheiben werden getrocknet und anschließend bei 800 °C vorgebrannt, um die Organik zu entfernen. Das Sintern erfolgt bei 1230 °C mit anschließendem heißisostatischen Pressen bei 1200 °C, wobei die Scheiben zu transluzenten Scheiben verdichtet werden. Anschließend kann die Oberfläche feingeschliffen und poliert werden.

### Ausführungsbeispiel 8:

27,08 g Korundpulver (zum Beispiel Taimei TM-DAR), 36,30 g Yttriumoxidpulver (Reacton 99,99) und 0,15 g Cerium(III)nitrat werden als keramische Partikel in 40 g deionisiertem Wasser in dem 4 g des Dispergierhilfsmittels Ammoniumpolyacrylat gelöst sind, dispergiert und über Nacht mit einer Kugelmühle zusammen mit Korundmahlkugeln gemahlen. Danach wird die Suspension von den Mahlkugeln getrennt und die Monomere Polyethylenglycoldimethacrylat, mit einer mittleren Molmasse von 1000 g/mol, und Methacrylamid im Masseverhältnis 1:1 zugesetzt, so dass der Monomergehalt 4 Masse% beträgt. Nach Zugabe von 0,5 ml einer 2%igen N,N,N',N'-Tetramethyl ethylenediamine (TEMED) -Lösung, sowie 0,5 ml einer 2%igen Ammoniumperoxodisulfatlösung wird die Suspension bei 200 mbar für 20 Minuten entgast, in eine einseitig verschlossene Acrylglas-Form als Gießform gegeben. Die weitere Verarbeitung erfolgt wie in Ausführungsbeispiel 2 beschrieben, jedoch erfolgt die Sinterung bei 1650 °C an Luft zu transluzenten lumineszierenden Substraten.

### Ausführungsbeispiel 9:

600 g feinkörniges synthetisches Korundpulver mit Reinheit von 99,99 % und einer Partikelgröße d90 = 0.2 µm werden in 180 g deionisiertem Wasser in dem 12 g des Dispergierhilfsmittels Ammoniumpolyacrylat gelöst ist, dispergiert und über Nacht mit einer Kugelmühle zusammen mit Korundmahlkugeln gemahlen. Danach wird die Suspension von den Mahlkugeln getrennt und die Monomere Polyethylenglycoldimethacrylat, mit einer mittleren Molmasse von 1000 g/mol, Methylen-bisacrylamid und Methacrylamid im Masseverhältnis 1:2:16 zugesetzt, so dass der Monomergehalt 3,5 Masse% beträgt. Nach Zugabe von 4 ml einer 5%igen N,N,N',N'-Tetramethyl ethylenediamine (TEMED) -Lösung, sowie 4 ml einer 5%igen Ammoniumperoxodisulfatlösung wird die Suspension bei 200 mbar für 20 Minuten entgast, in eine einseitig verschlossene Acrylglas-Form, welche die Abmaße 50 mm x 100 mm x 50 mm aufweist, gefüllt, anschließend verschlossen und bei Raumtemperatur temperiert, wobei die Suspension polymerisiert. Am nächsten Tag wird die Gießform in eine Schneidvorrichtung eingespannt. An der Schneidvorrichtung wird ein Anschlag auf einen Abstand von 1,5 mm hinter dem kreisförmigen, rotierenden Messer als Schneidmittel eingestellt. Der gebildete, formstabile, elastische Gelformkörper wird mit einem Schieber als Vorschubmittel an den Anschlag gedrückt, so dass er aus der Acrylglasform herausragt. Der formstabile, elastische Gelformkörper wird parallel zum rotierenden Messer geführt, so dass jeweils eine Scheibe von dem formstabilen, elastischen Gelformkörper abgeschnitten werden kann. Dieser Vorgang wird wiederholt indem der verbleibende Rest des Gelformkörpers erneut gegen den Anschlag gedrückt wird. Die hergestellten Scheiben werden getrocknet und bei 800 °C vorgebrannt um die Organik zu entfernen. Danach können die Scheiben geschliffen werden, bevor sie bei einer Temperatur von 1230 °C gesintert und bei einer Temperatur von 1200 °C heißisostatisch unter Schutzgas zu transluzenten Scheiben verdichtet werden. Anschließend wird die Oberfläche feingeschliffen und poliert, so dass transparente Wafer einer Dicke von 0,8 mm entstehen.

### Ausführungsbeispiel 10:

150 g feinkörniges synthetisches Korundpulver mit Reinheit von 99,99 % und einer Partikelgröße von d90 = 0.2 µm wird in 90 ml deionisiertem Wasser in dem 0,0005 % Riboflavin gelöst sind bei einem PH-Wert von 4, welcher mit verdünnter Salpetersäure eingestellt ist, dispergiert und über Nacht mit einer Kugelmühle zusammen mit Korundmahlkugeln gemahlen. Danach wird die Suspension von den Mahlkugeln getrennt und die Monomere Polyethylenglycoldimethacrylat mit einer mittleren Molmasse von 1000 g/mol, Methylen-bisacrylamid und Methacrylamid im Masseverhältnis 1:2:16 zugesetzt, so dass der Monomergehalt 3,5 Masse% beträgt. Nach Zugabe von 2 ml 1%igen Mischung aus Ammoniumperoxodisulfat und N,N,N',N'-Tetramethyl ethylenediamine (TEMED) im Verhältnis 1:3,3 wird die Suspension bei 200 mbar im Vakuum entgast und in ein einseitig verschlossenes Acrylglas-Rohr, welches einen Durchmesser von 21 mm Durchmesser und einen Länge von 250 mm sowie einen mittig angeordneten Acrylglasstab mit einem Durchmesser von 6 mm als Kern aufweist, gegossen. Die Gießform in Form des Acrylglas-Rohrs wird verschlossen und bei Raumtemperatur für eine Zeitdauer von 2 Stunden mit UV-Licht bestrahlt, um die Polymerisation zu starten. Das Acrylglas-Rohr wird dann in eine Schneidvorrichtung eingespannt. An der Schneidvorrichtung wird ein Anschlag auf einen Abstand von 5 mm hinter dem kreisförmigen, rotierenden Messer eingestellt. Der formstabile, elastische Gelformkörper wird parallel zum rotierenden Messer geführt, so dass jeweils eine 5 mm dicke Scheibe von dem formstabilen, elastischen Gelformkörper abgeschnitten werden kann. Dieser Vorgang wird wiederholt, indem der verbleibende Rest des formstabilen, elastischen Gelformkörpers erneut gegen den Anschlag gedrückt wird. Die Scheiben werden getrocknet und bei 600 °C vorgebrannt, um die Organik zu entfernen. Das Sintern erfolgt bei einer Temperatur von 1230 °C. Anschließend werden die Scheiben bei einer Temperatur von 1200 °C heißisostatisch zu transluzenten Scheiben verdichtet. Anschließend wird die Oberfläche feingeschliffen und poliert.

### Ausführungsbeispiel 11:

600 g feinkörniges synthetisches Spinellpulver SR8 (Baikowski) zur Verwendung als keramisches Ausgangsmaterial, werden in 300 g deionisiertem Wasser, in dem 20 g des Dispergierhilfsmittels Ammoniumpolyacrylat gelöst sind, dispergiert und über Nacht mit einer Kugelmühle zusammen mit Korundmahlkugeln gemahlen. Danach wird die Suspension von den Mahlkugeln getrennt und die Monomere N-Vinyl-Pyrrolidon und Polyethylenglycoldimethacrylat mit einer mittleren Molmasse von 1000 g/mol und im Masseverhältnis 1:1,5 zugesetzt, so dass der Monomergehalt 4 % beträgt. Nach Zugabe von 6 ml einer 2%igen Ammoniumperoxodisulfatlösung wird die Suspension filtriert und bei 200 mbar für 60 Minuten entgast, in eine einseitig verschlossene Acrylglas-Form, welche die Abmaße 50 mm x 100 mm x 50 mm aufweist, gefüllt und verschlossen. Die so vorbereitete Gießform wird bei 50 °C für 4 Stunden temperiert, wobei die Suspension polymerisiert. Am nächsten Tag wird die Gießform in eine Schneidvorrichtung eingespannt. Die Schneidvorrichtung weist ein exzentrisch rotierendes Messer als Schneidmittel auf. Der gebildete, formstabile, elastische Gelformkörper wird mit einem passenden Schieber von hinten aus der Gießform gedrückt, so dass er aus der Acrylglas-Form etwas herausragt und durch das exzentrisch rotierende Messer von oben in einer Umdrehung des rotierenden Messers eine Scheibe vom formstabilen, elastischen Gelformkörper vollständig abgeschnitten wird und nach unten auf eine Auflage fällt. Infolge des weiteren Vorschubs wird jeweils die nächste Scheibe abgeschnitten bis der formstabile, elastische Gelformkörper vollständig zerteilt ist. Beim Schneiden kann der formstabile, elastische Gelformkörper auch aus der Gießform entnommen werden und durch eine geeignete Haltevorrichtung oder Überführungsvorrichtung positioniert werden. Die Scheiben werden getrocknet und bei 800 °C vorgebrannt, um die Organik zu entfernen. Vor dem Sintern kann ein Bearbeitungsschritt durch Schleifen vorgesehen werden. Das Sintern erfolgt bei einer Temperatur von 1600 °C. Anschließend werden die Scheiben bei einer Temperatur von 1750 °C heißisostatisch unter Schutzgas zu transparenten Scheiben verdichtet. Anschließend kann die Oberfläche feingeschliffen und poliert werden, so dass transparente Wafer entstehen.

### Ausführungsbeispiel 12:

Nach dem erfindungsgemäßen Verfahren soll ein Zahnrad mit Außenverzahnung und einer mittigen Öffnung hergestellt werden. Die 3D-Daten des Zahnrades werden auf 115 % bis 150 % vergrößert, um die Schwindung auszugleichen. Die Vergrößerung entspricht dem Schwindaufmaß in der zweiten Richtung der Gießform beziehungsweise des herzustellenden Grünkörperrohlings. Die Form des vergrößerten Zahnrades wird in axialer Richtung, welche der ersten Richtung entspricht, auf ein Maß von 100 mm festgelegt. Damit entspricht der Volumenkörper in der ersten Richtung einem Vielfachen der Längenausdehnung des herzustellenden Zahnrades, welches eine Dicke von 5 mm aufweist. Dieser Volumenkörper dient als Vorlage für die Gießform, die mit einem 3D-Drucker im Stereolithographieverfahren hergestellt wird. Die Gießform umschließt den Volumenkörper mit einer Wandstärke von 5 mm und weist beidseitig Öffnungen auf, so dass eine Röhre mit innenliegenden Zähnen entsteht. Die Deckel an der Unterseite und an der Oberseite sind abgedichtet. Der untere Deckel hat mittig eine trichterförmige Führung zur Aufnahme eines Kerns, welcher die axiale Durchbrechung des herzustellenden Volumenkörpers ausbildet. Der obere Deckel weist eine axialsymmetrische Öffnung auf, so dass er auf den Kern gesteckt werden kann und den Kern dabei zentriert. Weiterhin weist der obere Deckel eine Einfüllöffnung und eine Auslassöffnung für Luft auf. Nach der Polymerisation wird die Gießform in eine Schneidvorrichtung eingespannt, der Kern herausgedreht und der gebildete formstabile, elastische Gelformkörper mit einem Werkzeug etwas herausgedrückt, so dass er den eingestellten Anschlag der Schneidemaschine erreicht. Der Anschlag entspricht der Dicke der Vorlage des Zahnrades unter der für die Gießform gewählten Vergrößerung. Durch Bewegung parallel zum rotierenden Messer werden nacheinander einzelne Zahnräder abgeschnitten. Die Zahnräder werden zwischen saugfähigem Papier getrocknet und zur Entfernung der Organik vorgebrannt. Das Sintern erfolgt unter Anwesenheit von Luft. Zur Herstellung transluzenter Keramik können die Zahnräder zusätzlich heißisostatisch gepresst werden. Das Ausführungsbeispiel 12 ist für sämtliche in den Ausführungsbeispielen 2 bis 11 angegebenen Suspensionen durchführbar.

### Ausführungsbeispiel 13:

Nach dem erfindungsgemäßen Verfahren soll eine Sechskantmutter mit Innengewinde hergestellt werden. Die 3D-Daten der Sechskantmutter werden je nach Feststoffgehalt der Suspension auf ca. 115 % bis 150 % vergrößert, um die Schwindung auszugleichen. Die Vergrößerung entspricht dem Schwindaufmaß in der zweiten Richtung der Gießform beziehungsweise des herzustellenden Grünkörperrohlings. Da die Grünkörperrohlinge im Trocknungsprozess beziehungswiese die Grünkörper während des Sinterns schwinden, werden die Gießformen mit einem Schwindaufmaß dimensioniert, um formstabile, elastische Gelformkörper mit entsprechendem Schwindaufmaß zu erhalten. Die Form der vergrößerten Sechskantmutter wird in axialer Richtung, welche der ersten Richtung entspricht, auf ein Maß von 200 mm festgelegt. Ein Schwindaufmaß kann auch in axialer Richtung, das heißt in der ersten Richtung ausgebildet sein. Damit entspricht der Volumenkörper einem in der ersten Richtung einem Vielfachen der Längenausdehnung der herzustellenden Sechskantmutter, welche eine Dicke von 4 mm aufweist. Dieser Volumenkörper dient als Vorlage für die Gießform, die mit einem 3D-Drucker im Stereolithographieverfahren hergestellt wird. Die Gießform umschließt den Volumenkörper mit einer Wandstärke von 5 mm und weist beidseitig ausgebildete Öffnungen auf, so dass eine Röhre mit einer innen liegenden Sechskantfläche entsteht. Die Deckel an der Unterseite und an der Oberseite sind abgedichtet. Der untere Deckel hat mittig eine trichterförmige Führung zur Aufnahme des Kerns. Der obere Deckel hat mittig eine Öffnung, so dass er auf den Kern gesteckt werden kann und den Kern dabei zentriert. Der Kern weist ein durchgehendes Außengewinde auf. Weiterhin hat der obere Deckel eine Einfüllöffnung und eine Auslassöffnung für Luft. Das weitere Vorgehen erfolgt analog zum vorstehenden Ausführungsbeispiel 12. Der Prozess der Herstellung der Suspension und der Prozess des Gießens können analog zu einem der Ausführungsbeispiele 1 bis 11 erfolgen.

### Ausführungsbeispiel 14:

Nach dem erfindungsgemäßen Verfahren sollen Ringe hergestellt werden. Hierzu wird eine Gießform konstruiert deren Innenwand ein Polyeder mit 24 Ecken bildet, wobei in der Mitte ein Stab durch Kappen an der Oberseite und Unterseite fixiert wird. Der Polyeder, welcher eine Höhe von 20 cm aufweist, soll die Außenseite der Ringe abbilden und der Stab die Innenseite. Der Hohlraum der Gießform bildet eine Röhre, die mit der Suspension befüllt wird und nach der Polymerisation und Entformung mit der Schneidvorrichtung in einzelne Ringe geschnitten wird. Das Ringmaß wird entsprechend der Schwindung eingestellt. Das Schwindaufmaß entspricht der zweiten Richtung, wobei die erste Richtung die axiale Richtung ist. Um auf der Innenseite der Ringe eine Rundung zu erzeugen, können in einer Abwandlung des Ausführungsbeispiels auf das innere Rohr Einsätze geschoben werden, bei denen jeder einzelne Ring aus zwei Rundungen entsteht. Die Einsätze enthalten Öffnungen, durch welche die Suspension fließen kann. Nach der Polymerisation und Entformung können die einzelnen Ringe entlang der Einsätze abgeschnitten werden. Alternativ kann vorgesehen werden, dass ohne Einsätze gearbeitet und ein mittig angeordneter Stab aus einem Material verwendet wird, welches schneidbar ist, um eine elastische Verbiegung des Gelkörpers während des Schneidprozesses zu vermeiden. In einer weiteren Abwandlung wird beim Entformen zunächst der Stab aus dem Gel gezogen und durch einen Kern aus einem schneidbaren Material, zum Beispiel Polymer und/oder Wachs ersetzt, so dass der Ring zusammen mit dem Kern geschnitten werden kann.

### Bezugszeichenliste

- 1: erster Verfahrensschritt: Herstellung der Suspension
- 2: zweiter Verfahrensschritt: Befüllung der Gießform
- 3: dritter Verfahrensschritt: Polymerisation
- 4: vierter Verfahrensschritt: Entformung
- 5: fünfter Verfahrensschritt: Konfektionierung
- 6: sechster Verfahrensschritt: Trocknung
- 7: siebenter Verfahrensschritt: thermische Behandlung

## Patentansprüche

1. Verfahren zum Bereitstellen von Grünkörpern für die Herstellung von keramischen Formkörpern, insbesondere transparenten Keramikwafern und hochdichten Keramiken, bei dem Verfahren eine Suspension enthaltend keramische Partikel und einen Gelbildner zur Ausbildung eines formstabilen, elastischen Gelformkörper bereitgestellt wird, die Suspension in eine Gießform überführt wird, welche in mindestens eine erste Richtung einem Vielfachen der Längenausdehnung eines vorgegebenen Grünkörperrohlings entspricht und in mindestens eine weitere Richtung ein vorgegebenes Schwindaufmaß aufweist, die überführte Suspension infolge einer Polymerisationsreaktion des Gelbildners einen sich an der Gießform abformenden, formstabilen, elastischen Gelformkörper ausbildet, der erhaltene formstabile, elastische Gelformkörper vor einer Trocknung mit einem Schneidmittel materialverlustfrei in mehrere vorgegebene Grünkörperrohlinge konfektioniert wird und die so erhaltenen konfektionierten Grünkörperrohlinge anschließend getrocknet werden.

2. Verfahren nach dem vorhergehenden Anspruch, **dadurch gekennzeichnet, dass** keramische Partikel mit einer mittleren Partikelgröße im Bereich von 0,01 µm bis 10 µm, bevorzugt im Bereich von 0,025 µm bis 5 µm, besonders bevorzugt im Bereich von 0,05 µm bis 2 µm eingesetzt und in der Suspension suspendiert werden.

3. Verfahren nach einem der vorhergehenden Ansprüche 1 oder 2, **dadurch gekennzeichnet, dass** ein Gelbildner ausgewählt aus Abkömmlingen einer Gruppe enthaltend Polymere/Copolymere gebildet aus Acrylaten, Methacrylaten, Ethylenglycolen, Pyrrolidonen, Saccariden, Vinylalkoholen, Acrylamiden, Isobutylen, Maleinsäureanhydrid eingesetzt wird.

4. Verfahren nach einem der vorhergehenden Ansprüche 1 bis 3, **dadurch gekennzeichnet, dass** die Suspension so bereitgestellt wird, dass der Feststoffgehalt an keramischen Partikeln 20 Vol% bis 80 Vol%, vorzugsweise 30 Vol% bis 60 Vol% beträgt.

5. Verfahren nach einem der vorhergehenden Ansprüche 1 bis 4, **dadurch gekennzeichnet, dass** der formstabile, elastische Gelformkörper und das Schneidmittel beim Konfektionieren relativ zueinander mit einem vorgegeben konstanten Vorschub bewegt werden.

6. Verfahren nach einem der vorhergehenden Ansprüche 1 bis 5, **dadurch gekennzeichnet, dass** der formstabile, elastische Gelformkörper gleichzeitig mit mehreren gleichmäßig beabstandeten Schneidmitteln konfektioniert wird.

7. Verfahren nach einem der vorhergehenden Ansprüche 1 bis 6, **dadurch gekennzeichnet, dass** als Schneidmittel eine oder mehrere Klinge(n) und/oder ein oder mehrere gespannte(r) Schneiddraht/Schneiddrähte eingesetzt wird/werden.

8. Verfahren nach einem der vorhergehenden Ansprüche 1 bis 7, **dadurch gekennzeichnet, dass** der formstabile, elastische Gelformkörper entlang der ersten Richtung, vorzugsweise orthogonal zur ersten Richtung, konfektioniert wird

9. Grünkörper für die Herstellung von keramischen Formkörpern, insbesondere transparenten Keramikwafern und hochdichten Keramiken, wobei der Grünkörper eingebettete keramische Partikel aufweist und wobei der Grünkörper aus einem formstabilen, elastischen Gelformkörper durch materialverlustfreies Schneiden mit mindestens einer Klinge und/oder mindestens einem Schneiddraht konfektioniert ist.

10. Vorrichtung zur Bereitstellung von Grünkörpern zur Herstellung von keramischen Formkörpern, insbesondere transparenten Keramikwafern und hochdichten Keramiken, die Vorrichtung aufweisend
- eine zur Bereitstellung eines formstabilen, elastischen Gelformkörpers vorgesehene Gießform, welche in mindestens eine erste Richtung einem Vielfachen der Längenausdehnung eines vorgegebenen Grünkörperrohlings entspricht und in mindestens eine weitere Richtung ein vorgegebenes Schwindaufmaß aufweist, und
- eine zur Konfektionierung eines aus der Gießform erhaltenen formstabilen, elastischen Gelformkörpers vorgesehene Schneidvorrichtung, welche mindestens ein Schneidmittel zum materialverlustfreien Schneiden des formstabilen elastischen Gelformkörpers aufweist.

11. Vorrichtung nach Anspruch 10, **dadurch gekennzeichnet, dass** die Gießform modular, vorzugsweise zylindrisch mit beidseitig fluiddicht verschließbaren Deckeln ausgebildet ist.

12. Vorrichtung nach einem der Ansprüche 10 oder 11, **dadurch gekennzeichnet, dass** der formstabile, elastische Gelformkörper und das mindestens eine Schneidmittel relativ zueinander mit einem vorgegebenen Vorschub bewegbar sind.

13. Vorrichtung nach einem der Ansprüche 10 bis 12, **dadurch gekennzeichnet, dass** die Schneidvorrichtung in einem vorgegebenen Abstand zueinander angeordnete Schneidmittel aufweist, wobei der Abstand zwischen den Schneidmitteln einstellbar ist.

14. Vorrichtung nach einem der Ansprüche 10 bis 13, **dadurch gekennzeichnet, dass** das Schneidmittel zumindest eine Klinge und/oder zumindest ein gespannter Draht ist/sind.

15. Vorrichtung nach Anspruch 14, **dadurch gekennzeichnet, dass** die Klinge eine Messerklinge oder eine rotierende Kreisscheibe ist und aus Keramik oder aus Metall mit einer Beschichtung aus Teflon oder Keramik ausgebildet ist.

16. Vorrichtung nach einem der Ansprüche 10 bis 15, ferner aufweisend ein einer Form zumindest einer Seite der Gießform nachgebildetes, plattenförmiges Überführungsmittel, mit welchem ein aus der Gießform erhaltener formstabiler, elastischer Gelformkörper in die Schneidvorrichtung überführbar ist.

17. Vorrichtung nach einem der Ansprüche 10 bis 16, ferner aufweisend Gießkerne, welche zur Ausbildung von formstabilen elastischen Gelformkörpern in der Gießform anordenbar sind.

18. Vorrichtung nach einem der Ansprüche 10 bis 17, ferner aufweisend eine Trocknungseinrichtung zum Trocknen von konfektionierten, formstabilen, elastischen Formkörpern, um konfektionierte Grünkörper zu erhalten.

19. Verfahren zum Herstellen von keramischen Formkörpern, insbesondere transparenten Keramikwafern und hochdichten Keramiken aus Grünkörpern, hergestellt durch ein Verfahren nach den Ansprüchen 1 bis 8, wobei die Grünkörper bei einer Temperatur im Bereich von 1100 °C bis 1850 °C, vorzugsweise im Bereich von 1200 °C bis 1600 °C gesintert werden.

20. Verfahren nach Anspruch 19, **dadurch gekennzeichnet, dass** die Grünkörper vor dem Sintern bei einer Temperatur im Bereich von 400 °C bis 1000 °C vorgebrannt werden.

21. Verfahren nach Anspruch 19 oder 20, **dadurch gekennzeichnet, dass** die aus den Grünkörpern gesinterten Keramiken nach dem Sintern bei einer Temperatur im Bereich von 1100 °C bis 1800 °C heißverpresst oder heißisostatisch verpresst werden.
